# EUROPÄISCHE PATENTANMELDUNG

(11) **EP 4 011 802 A1**
(43) Veröffentlichungstag der Anmeldung: **15.06.2022**
(21) Anmeldenummer: 21213901.8
(22) Anmeldetag: 10.12.2021
(51) Int. Cl.: B65D 63/10, G01D 7/00, F16L 57/06

(54) **SCHEUERSCHUTZVORRICHTUNG FÜR AN BEWEGLICHEN MASCHINENTEILEN ENTLANG GEFÜHRTE FLEXIBLE ROHRE, SCHLÄUCHE ODER KABEL**

(30) Priorität: 10.12.2020 DE 102020133007
(71) Anmelder: BECKER GmbH, 48249 Dülmen (DE)
(72) Erfinder: Langenkämper, Heinz, 45721 Haltern am See (DE); Broekhuijsen, Andries, 48249 Dülmen (DE)
(74) Vertreter: Tarvenkorn, Oliver

(57) **Zusammenfassung**

Scheuerschutzvorrichtung (100) für an beweglichen Maschinenteilen entlang geführte flexible Rohre, Schläuche oder Kabel, wenigstens umfassend zwei Ringhälften (103), die miteinander zu einer geschlossenen Ringstruktur mit wenigstens einer Durchführungsöffnung kombinierbar sind, wobei die Ringhälften (103) an wenigstens einer Fuge (107) aneinander liegen,
dadurch gekennzeichnet,
- dass die Ringhälften (103) jeweils an einem Ende durch wenigstens ein über eine erste Fuge (107) hinweg wirkendes Formschlussmittel aneinandergehalten sind und
- dass die Ringhälften (103) an wenigstens einer zweiten Fuge (107) mit wenigstens einem Kabelbinder (1) miteinander verbindbar sind, wobei der Kabelbinder (1) in beiden aneinander liegenden Ringhälften (103) formschlüssig gehalten ist und die Fuge (107) überbrückt.

## Beschreibung

Die Erfindung betrifft eine Scheuerschutzvorrichtung für an beweglichen Maschinenteilen entlang geführte flexible Rohre, Schläuche oder Kabel mit den Merkmalen des Oberbegriffs des Anspruchs 1.

Eine solche Scheuerschutzvorrichtung, auch als *wear defence* bezeichnet, umfasst einen ringförmigen Verschleißkörper, der insbesondere für beweglich verlegte flexiblen Rohre u.a. auch für Wellrohre, Schläuche oder Kabel verwendet wird und Stellen schützt, die durch Kontakt mit Maschinenteilen einem Verschleiß unterliegen. Bevorzugtes Anwendungsgebiet ist der Verschleißschutz von als Wellrohr ausgebildeten Schutzrohren für Kabel und Leitungen, die an beweglichen Maschinenteilen, z.B. entlang von Roboterarmen, verlegt sind. Des Weiteren sind zahlreiche andere Anwendungsgebiete denkbar, bei denen eine Verschleißgefahr von Kabeln, Schläuchen oder Schutzrohren besteht. Die Scheuerschutzvorrichtung wird an gefährdeten Positionen ringförmig über das Kabel- und/oder Schlauchbündel oder über das Schutzrohr montiert und schützt sowohl das Bündel oder Rohr als auch die Maschinenteile wie z.B. einen Roboterarm, an dem das Bündel oder Rohr verlegt ist, gegen Verschleiß jeglicher Art einschließlich Beschädigungen durch Stoßund/oder Reibbewegungen.

Gattungsgemäße Scheuerschutzvorrichtung sind handelsüblich und z.B. aus DE 202 13 994 U1, DE 299 20 972 U1, DE 29814418U1 und DE 20 2007 012 036 U1 bekannt.

Als Verbindungsmittel für das Verbinden und Zusammenhalten der beiden Ringhälften dienen in der Regel Schrauben, die durch eine Öffnung in der einen Ringhälfte durchgesteckt und in eine Gewindebohrung in der anderen Ringhälfte eingeschraubt werden, oder über an den Ringhälften angeformte, zusammenwirkende Rastmittel, die ein Zusammenklipsen der Ringhälften ermöglichen.

Die Verbindung mittels Schrauben hat sich bewährt, ist aber wirtschaftlich nur mittels Spezialwerkzeug zu realisieren, z.B. mit Hilfe von Akkuschraubern. Nachteil ist weiter das Beschädigungsrisiko der Maschinenteile, mit denen die Scheuerschutzvorrichtung in Berührung kommt, durch die verwendeten Metallschrauben. Kunststoffschrauben haben sich aus verschiedenen Gründen nicht durchgesetzt.

Auch die Verbindung der beiden Ringhälften mittels Zusammenklipsen ist nachteilig, da bei der Montage hohe Fügekräfte benötigt werden, um eine feste Rastverbindung zu erhalten. Damit ist zugleich auch die spätere Demontage der Rastverbindung erschwert.

Die Aufgabe der vorliegenden Erfindung besteht somit darin, eine Scheuerschutzvorrichtung in Bezug auf die Montagegeschwindigkeit und -freundlichkeit, die Vermeidung von Hartteilen wie Metallschrauben, die Funktionssicherheit im Betrieb der Maschine und allgemein in Bezug auf Wirtschaftlichkeit und Langlebigkeit zu optimieren.

Diese Aufgabe wird durch eine Scheuerschutzvorrichtung mit den Merkmalen des Anspruchs 1 gelöst.

Bei den verschiedenen möglichen Ausführungsformen der Erfindung besteht ein übereinstimmendes Merkmal darin, dass an einer der beiden Fugen zwischen den Ringhälften eine Verbindung über Formschlusselemente vorgesehen ist, die auch gelenkig nach Art eines Scharniers sein kann und dass zumindest an der anderen Fuge eine formschlüssige Verbindung erzielt wird, indem ein Kabelbinder durch Öffnungen oder Vorsprünge an beiden Ringhälften gezogen wird.

Kabelbinder sind marktgängige, weitgehend genormte Massenprodukte, die in Standardausführungen sehr preisgünstig sind. Sie sind in der Regel einteilig und bestehen aus einem bandförmigen Teil mit einem Kopf mit einem durchgehendem Kanal, in den das freie Ende des bandförmigen Teiles gesteckt werden kann. Der Kopf ist mit Rast- oder Klemmvorrichtungen versehen, womit das durchgesteckte Bandende festgehalten wird. Derartige Kabelbinder werden z.B. in DE-A-2261528 und DE-A-1934590 beschrieben. Erfindungsgemäß werden solche Kabelbinder als Verbindungsmittel der beiden Ringhälften einer Scheuerschutzvorrichtung verwendet, wobei die Ringhälften an beiden Enden im Bereich der Fuge spezielle Öffnungen für die Aufnahme eines Kabelbinders aufweisen.

Mit geschlossenen Kabelbinder wird erreicht, dass beide Ringhälften und des Scheuerschutz sicher und dauerhaft zuverlässig miteinander verbunden bleiben und damit die Funktion als Verschleißschutz für Schutzrohr, Wellrohr, Kabelbündel mit und ohne Schutzrohr, Schlauchbündel und funktionsmäßig damit verbundene Aufgaben zuverlässig und dauerhaft erfüllen. Am Ende der Ringhälften im Bereich der Fuge befinden sich beidseitig Materialaussparungen, wo der Kopf des Kabelbinders Platz findet und gegen Verschleiß und sämtliche Beschädigungen, die von außen wirken können, geschützt sind.

Die Kabelbinder werden immer erst dann festgezogen, wenn beide Ringhälften der Scheuerschutzvorrichtung von gegenüberliegenden Seiten auf das Rohr, das Bündel oder den Schlauch aufgesetzt werden und dieses bzw. diesen ringförmig umfassen.

Muss die Scheuerschutzvorrichtung wieder geöffnet werden, um z. B. ein darin aufgenommenes Kabel auszutauschen, braucht lediglich der Kabelbinder abgeschnitten zu werden.

Die Ringhälften sind vorzugsweise als einstückige Spritzgussteile aus einem Kunststoff mit guten Verschleißeigenschaften gefertigt.

Eine vorteilhafte Ausführungsform des erfindungsgemäßen Scheuerschutzvorrichtung enthält eine optische Verschleißanzeige in der Form, dass die beiden Ringhälften der Scheuerschutzvorrichtung nach entsprechendem Verschleiß der äußeren konvexen Außenfläche der Scheuerschutzvorrichtung eine farbige Kennzeichnung zeigen. Die farbige Kennzeichnung des Scheuerschutz wird nach entsprechendem Verschleiß automatisch sichtbar und wird hervorgerufen durch ein oder mehrere farbigen Einsätze oder Schichten, die im Spritzgießverfahren hergestellt und in die Ringhälften eingebettet sind. Sie sind mit entsprechend festgelegtem Abstand unter der äußeren konvexen Außenfläche der Scheuerschutzvorrichtung angeordnet. Wenn diese abgetragen oder beschädigt ist, werden die farbigen Schichten sichtbar.

Die gewölbte Umfangsfläche der aus den Ringhälften gebildeten Ringstruktur ist ununterbrochen ausgebildet und wird lediglich am Ende beider Seiten der Scheuerschutzvorrichtung und am Ende, wo sich die beiden Fugen befinden, begrenzt.

Vorzugsweise, aber nicht notwendigerweise sind die Ringhälften identisch und/oder symmetrisch zueinander ausgebildet.

Weiterhin vorzugsweise erstrecken sich die Ringhälften über jeweils 180°, um die Möglichkeit zu schaffen, zwei identische Ringhälften miteinander zu kombinieren. Möglich ist aber auch, zwei unterschiedliche Ringhälften zu verwenden, von denen sich eine über mehr als 180° erstreckt und die andere über weniger als 180".

Schließlich ist die Erfindung nicht auf genau zwei Einzelteile als Ringhälften beschränkt. Es ist auch möglich, dass jede Ringhälfte eine Baugruppe aus mehreren Teilen ist. Entscheidend ist nur, dass bei der Montage an einem Kabel oder Schlauch eine abschließende Verbindung zweier Baugruppen, die die Form eine Ringsegments haben und gemeinsam eine Ringstruktur ausbilden, über wenigstens einen Kabelbinder erfolgt.

Ein Kabelklemmelement kann vorgesehen sein, das in die Ringstruktur zwischen den Ringhälften eingesetzt werden kann und zur Klemmung eines einzelnen Kabels oder Schlauchs oder auch von mehreren Kabeln und/oder Schläuchen dient. Das Kabelklemmelement wird aus einem relativ weichen Kunststoff wie z.B. Polyurethan mit entsprechender Shore-Härte hergestellt und ist für die nachgiebige Klemmung der entsprechend zu schützenden Kabel und oder Schläuche geeignet. Die Öffnungen im Kabelklemmelement sind vorzugsweise rund mit verschiedenen Durchmessern, aber können jegliche andere Form aufweisen.

Eine weitere Ausführungsform der Erfindung unterscheidet sich dadurch, dass die Ringhälften, und damit die Scheuerschutzvorrichtung insgesamt, an ihrer inneren Umfangsfläche kein Profil mit mehreren Rippen zum Eingriff in ein Wellrohr aufweist, sondern lediglich eine einzige nach innen vorspringende ringförmige Rippe zeigt. Diese Ausführungsform ist dann vorteilhaft, wenn die Scheuerschutzvorrichtung rein als Verschleißschutz auf dem Wellrohr funktionieren soll und nicht als Verbinder. Eine konvexe, sich von der Rippe aus aufweitende Innenfläche dieser Ausführungsform der Scheuerschutzvorrichtung erlaubt für ein Wellrohr links und rechts der Rippe eine Bewegungsfreiheit, die vorteilhaft für die Kinematik des Wellrohres bei komplexen Bewegungsabläufen ist, z.B. auf einem 6-Achsen-Industrieroboter. Durch entsprechende Toleranzgebung der Rippe und der kegeligen Flächen links und rechts daneben kann die Scheuerschutzvorrichtung als drehbare Scheuerschutzvorrichtung auf dem Wellrohr funktionieren. Durch die Rippe ist eine axiale Verschiebung auf dem Wellrohr ausgeschlossen. Des Weiteren ist diese Ausführungsform auch sehr gut geeignet für einen Einsatz mit Kabelklemmelementen für die Fixierung von Schläuchen und Kabeln oder Bündeln daraus.

Möglich ist auch eine Ausführungsform einer Scheuerschutzvorrichtung, bei der die Ringhälften einseitig über ein Scharnier verbunden sind. Die andere Seite der beiden Ringhälften der Scheuerschutzvorrichtung wird wiederum mit der erfindungsgemäßen Befestigungsart mittels eines Kabelbinders miteinander verbunden.

Die Erfindung wird nachfolgend anhand der Zeichnungen dargestellten Ausführungsbeispiele näher erläutert. Die Figuren zeigen im Einzelnen:

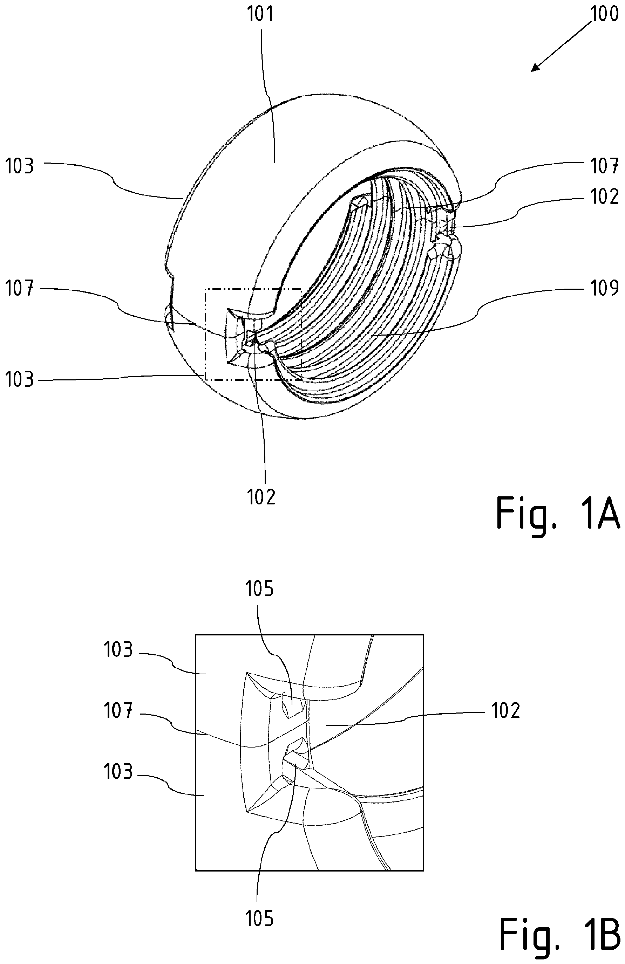

- Fig. 1A: eine zusammengesetzte Scheuerschutzvorrichtung gemäß einer ersten Ausführungsform in perspektivischer Ansicht;
- Fig. 1A: ein vergrößerter Ausschnitt aus Figur 1A;
- Fig. 2: die Einzelteile der Scheuerschutzvorrichtung gemäß Fig. 1A in perspektivischer Ansicht;
- Fig. 3: eine Draufsicht auf eine Stirnseite einer Ringhälfte der Scheuerschutzvorrichtung gemäß Fig. 1A;
- Fig. 4: die teilweise geöffnete Scheuerschutzvorrichtung gemäß Fig. 1A mit einem eingesetzten Kabelklemmelement;
- Fig. 5: eine zusammengesetzte Scheuerschutzvorrichtung gemäß einer zweiten Ausführungsform in perspektivischer Ansicht;
- Fig. 6: die Einzelteile der Scheuerschutzvorrichtung gemäß Fig. 5 in perspektivischer Ansicht;
- Fig. 7: eine Draufsicht auf eine Stirnseite einer Ringhälfte der Scheuerschutzvorrichtung gemäß Fig. 5;
- Fig. 8: eine zusammengesetzte Scheuerschutzvorrichtung gemäß einer dritten Ausführungsform in perspektivischer Ansicht;
- Fig. 9: die zusammengesetzte Scheuerschutzvorrichtung in seitlicher Ansicht;
- Fig. 10: die Einzelteile der Scheuerschutzvorrichtung gemäß Fig. 8 in perspektivischer Ansicht;
- Fig. 11: die teilweise geöffnete Scheuerschutzvorrichtung gemäß Fig. 8 mit einem eingesetzten Kabelklemmelement;
- Fig. 12: ein Kabelklemmelement mit sieben Durchführungsöffnungen in perspektivischer Ansicht und
- Fig. 13: ein Kabelklemmelement mit drei Durchführungsöffnungen in perspektivischer Ansicht.

Fig. 1A zeigt eine Scheuerschutzvorrichtung 100 gemäß einer ersten Ausführungsform der Erfindung in perspektivischer Ansicht. Sie besteht aus zwei gleichen Ringhälften 103, die mit ihren beiden Enden an zwei Fugen 107 aneinander liegen. Die Ringhälften 103 sind an ihrer Außenfläche 101 jeweilig ballig gestaltet und besitzen dort eine glatte Oberfläche, so dass vermieden wird, dass die Scheuerschutzvorrichtung 100 an vorstehenden Maschinenteilen hängen bleibt.

Am Innenumfang sind mehrere Rippen 109 und dazwischen liegende Nuten nach Art eines Wellrohrprofils ausgebildet, so dass die Scheuerschutzvorrichtung 100 zugleich als Verbindungselement für zwei Wellrohrabschnitte wirken kann.

Im Bereich der Fugen 107 sind an beiden ringförmigen Kanten der zweiteiligen Ringstruktur, also vorn und hinten, die Endbereiche schmaler ausgebildet, so dass randseitige Ausnehmungen 102 gebildet sind. Diese sind vorzugsweise so groß ausgebildet, dass der Kopf eines Kabelbinders ohne seitlichen Überstand darin bündig aufgenommen werden kann.

Wie insbesondere die vergrößerte Darstellung eines Ausschnitts des Bereichs einer Fuge 107 in Figur 1B zeigt, besitzen die Ringhälften 103 auf beiden Seiten jeweils eine Durchführung 105, die sich jeweils axial, also parallel zur Mittelachse der Ringanordnung, und damit quer durch die Ringhälfte 103 erstreckt. Beidseits der Fugen 107 ist somit je ein Paar von Durchführungen 105, 106 vorgesehen, durch die ein Kabelbinder oder ein anderes schlaufenförmiges Verbindungsmittel hindurch gezogen werden kann, um die beiden Ringhälften 103 fest miteinander zu verbinden. Der Kopf des Kabelbinders kann dabei vollständig in einer der beiden Ausnehmungen 102 aufgenommen werden.

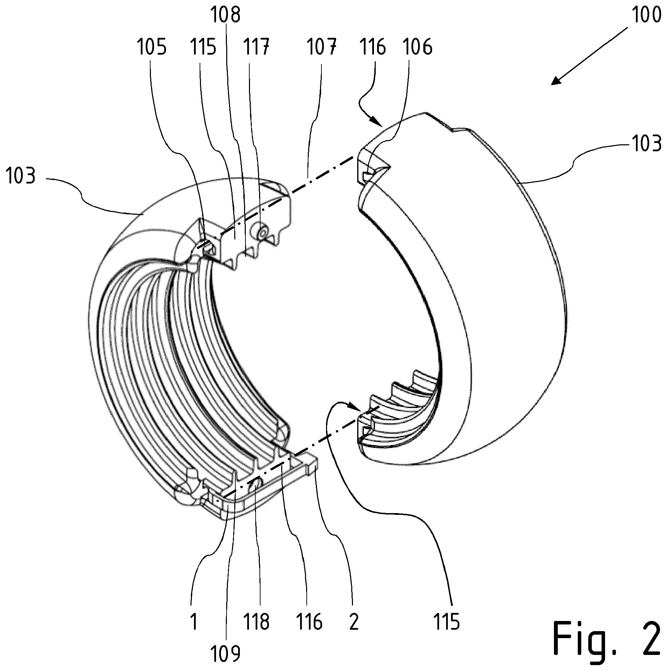

Fig. 2 zeigt die beiden entfernt voneinander angeordneten Ringhälften 103 in perspektivischer Ansicht. Bei der linken Ringhälfte 103 sind beide Stirnseiten sichtbar, welche Anlageflächen 115, 116 bilden, mit denen die Ringhälften 103 in der Ebene der Fuge 107 aneinander angelegt werden, um eine Ringstruktur auszubilden.

Die beiden Ringhälften 103 sind bei der Scheuerschutzvorrichtung 100 gemäß der ersten Ausführungsform identisch ausgebildet. Um miteinander kombinierbar zu sein, besitzt die obere Anlagefläche 115 einen vorspringenden Zapfen 117, und an der unteren Anlagefläche 116 eine Zapfenaufnahmeausnehmung 118. Zapfen 117 und Zapfenaufnahmeausnehmung 118 sind jeweils auf einer Symmetrieachse der Anlageflächen 115, 116 angeordnet und so gestaltet, dass eine formschlüssige Rastverbindung ausgebildet werden kann, wenn der Zapfen 117 in die Zapfenaufnahmeausnehmung 118 eingedrückt wird. Zapfen 117 und Zapfenaufnahmeausnehmung 118 dienen daher nicht nur der Zentrierung der beiden Ringhälften zueinander. Der Zapfen 117 ist als eine ballige Kugel ausgebildet, die an die Anlagefläche 115 angeformt ist. Die Zapfenaufnahmeausnehmung 118 besitzt am Übergang zur Anlagefläche 116 eine leichte Einschnürung.

Zur Herstellung der Scheuerschutzvorrichtung 100 werden die beiden Ringhälften 103 so zueinander positioniert und miteinander verbunden, wie in Figur 2 gezeigt, wobei sich jeweils eine Anlagefläche 115 mit Zapfen 117 und eine Anlagefläche 116 mit Zapfenaufnahmeausnehmung 118 gegenüberliegen, so dass an beiden Anlageflächen 115, 116jeweils ein Zapfen 117 in eine Zapfenaufnahmeausnehmung 118 eingedrückt werden kann. Dabei wird eine Rastverbindung ausgebildet wird, die die Ringhälften 103 zusammenhält und während der Montage sichert, bis die endgültige Position Scheuerschutzvorrichtung 100 an einem Schlauch oder Kabel festgelegt ist und die Verbindung abschließend über die eingezogenen Kabelbinder verstärkt ist. Danach wird an beiden Fugen 107 ein Kabelbinder 1 durch die Durchführungen 105 gezogen und gestrafft. An der unteren Anlagefläche 115 der Ringhälfte 103 sind der Verlauf des Kabelbinders 1 und die Lage von dessen Kopf 2 erkennbar.

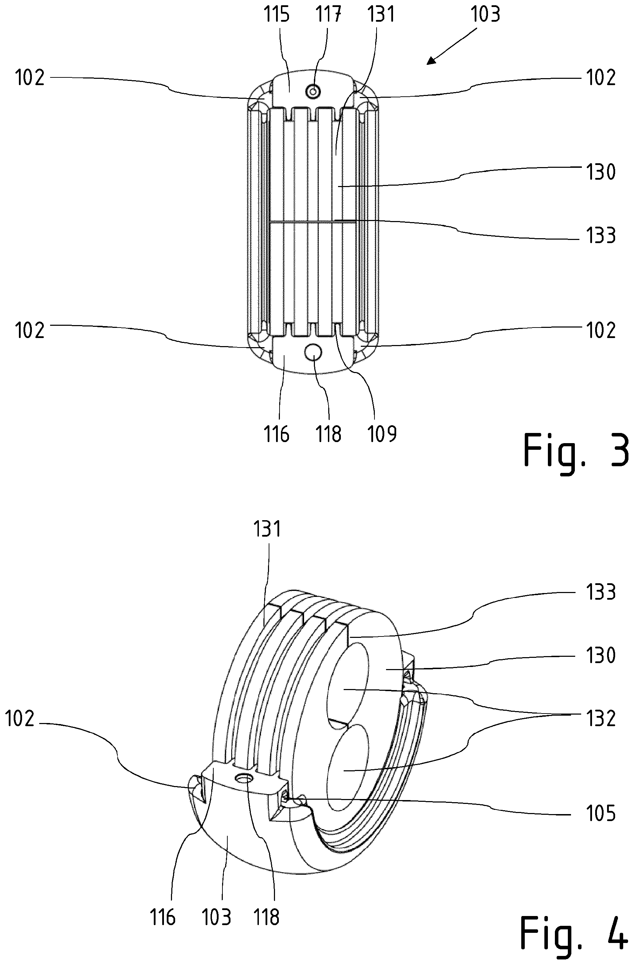

Fig. 3 zeigt eine einzelne Ringhälfte 103 in einer Draufsicht auf die beiden Anlageflächen 115, 116. Darin ist ein scheibenförmiges Kabelklemmelement 130 für zwei Kabel oder Schläuche eingesetzt. Das Kabelklemmelement 130 besitzt am Außenumfang ein Wellrohrprofil 131 aus Stegen und Nuten, in welche die Stege 109 am Innenumfang der Ringhälften 103 eingreifen, so dass in der Scheuerschutzvorrichtung 100 alternativ:
- ein Wellrohr eingesetzt werden kann,
- zwei Wellrohrenden innerhalb der Scheuerschutzvorrichtung 100 miteinander verbunden werden können oder
- ein Kabelklemmelement 130 eingesetzt werden kann.

Durch die Profilierung ist das Kabelklemmelement 130 in axialer Richtung formschlüssig festgelegt, sobald die beiden Ringhälften 103 zu der Scheuerschutzvorrichtung 100 kombiniert und miteinander verbunden sind.

Fig. 4 zeigt die Ringhälfte 103 mit dem eingesetzten Kabelklemmelement 130 in perspektivischer Ansicht. Das Kabelklemmelement 130 besitzt bei dieser Ausführungsform zwei große Kabeldurchführungsausnehmungen 132 übereinander. Eine Trennfuge 133 im Kabelklemmelement 130 erstreckt sich vom Außenumfang durch die erste Kabeldurchführungsausnehmung 132 hindurch bis zu der anderen Kabeldurchführungsausnehmung 132. An der Trennfuge 133 kann das aus einem elastischen Werkstoff hergestellte Kabelklemmelement 130 aufgeklappt werden, um die Kabel oder Schläuche einzulegen. Zumindest bietet die Trennfuge 133 die Möglichkeit, den Durchmesser der Kabeldurchführungsausnehmungen 132 zum Durchstecken von Kabeln vorübergehend etwas zu erweitern. Die Trennfuge 133 schließt sich beim Fügen der Ringhälften 103 wieder.

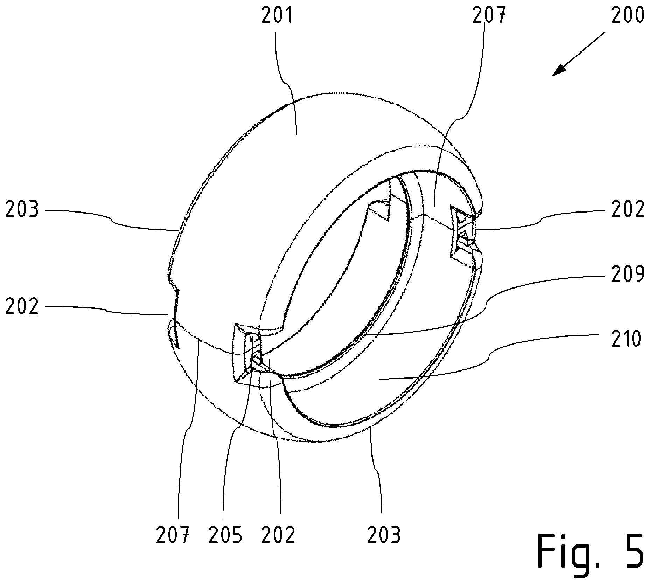

Fig. 5 zeigt eine zusammengesetzte Scheuerschutzvorrichtung 200 gemäß einer zweiten Ausführungsform der Erfindung in perspektivischer Ansicht. Sie besteht aus zwei Ringhälften 203, die an einer Fuge 207 aneinander anliegen. Die Scheuerschutzvorrichtung 200 ist an ihrer Außenfläche 201 ballig gestaltet und besitzt eine glatte Oberfläche. Bei dieser Ausführungsform ist auch der Innenumfang 210 nahezu glatt ausgebildet, mit Ausnahme einer einzigen Rippe 209. Im Bereich der Fugen 207 sind jeweils Durchführungen 205 vorgesehen, und an beiden Ringhälften 203 ist die Breite reduziert, so dass an den zusammengefügten Ringhälften 203 insgesamt vier Ausnehmungen 202 ausgebildet sind, um einen Kabelbinderkopf aufnehmen zu können.

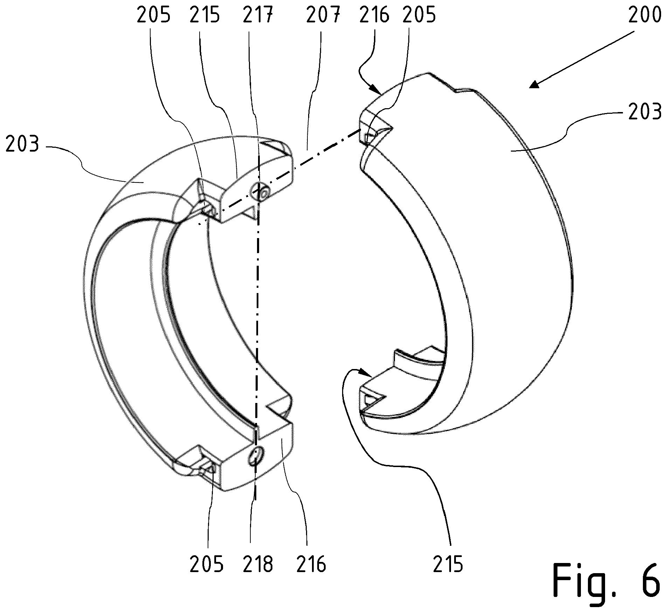

Fig. 6 zeigt die beiden voneinander getrennten Ringhälften 203 in perspektivischer Ansicht. Bei der Ringhälfte 203 sind beide Stirnseiten sichtbar, welche Anlageflächen 215, 216 bilden, mit denen die Ringhälften 203 in der Ebene der Fuge 207 aneinander liegen. Die beiden Ringhälften 203 sind auch bei der Scheuerschutzvorrichtung 200 gemäß der zweiten Ausführungsform identisch ausgebildet. Um miteinander kombinierbar zu sein, besitzen sie - wie bei der ersten Ausführungsform auch - zueinander komplementäre Formschlusselemente, die auf einer Symmetrielinie der Anlageflächen 215, 216 angeordnet sind. An der Anlagefläche 215 ist ein kugelförmiger, balliger Zapfen 217 vorgesehen, der bei der anderen Ringhälfte an der jeweils anderen Anlagefläche 216 in eine Zapfenaufnahmeausnehmung 218 mit Hinterschnitt eingreifen kann, um eine Rastverbindung zwischen den Ringhälften 203 auszubilden.

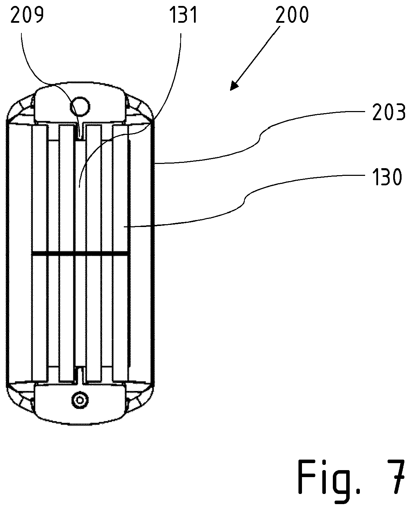

Wie Figur 7 zeigt, kann auch bei der Scheuerschutzvorrichtung 200 gemäß der zweiten Ausführungsform das gleiche Kabelklemmelement 130 eingesetzt werden, das schon bei der Scheuerschutzvorrichtung 100 in Figur 4 gezeigt war. Das Kabelklemmelement 130 ist über sein Wellrohrprofil 131 am Außenumfang und den Steg 209 am Innenumfang der Ringhälften 203 formschlüssig festgelegt.

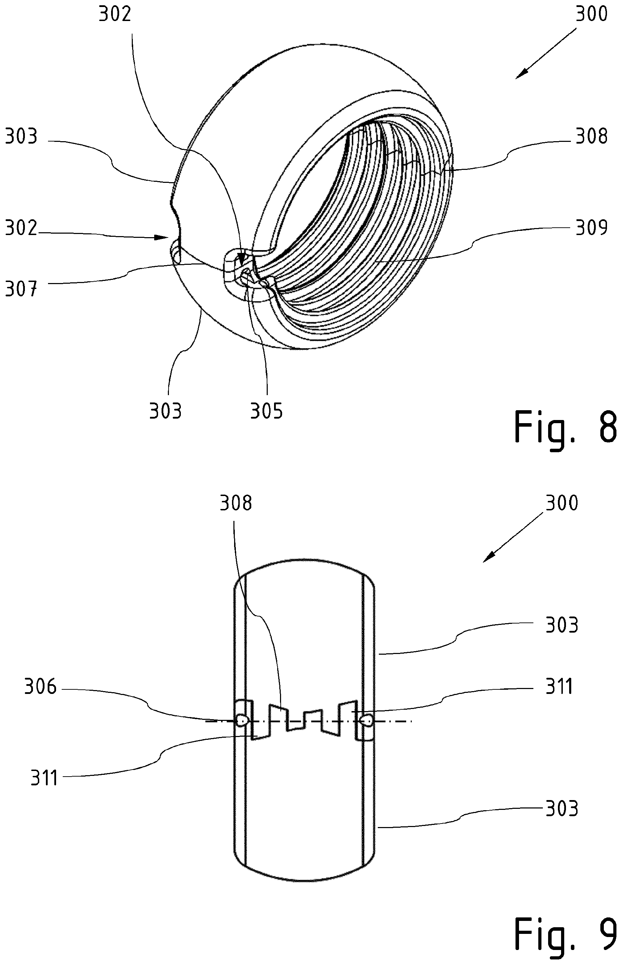

Eine dritte Ausführungsform einer Scheuerschutzvorrichtung 300 ist in Fig. 8 perspektivisch gezeigt. Im linken, vorderen Bereich liegen zwei Ringhälften 303 an einer Fuge 307 aneinander an. Außerdem berühren sie sich an einer weiteren Fuge 308. Wie bei beiden zuvor beschriebenen Ausführungsformen auch, besitzen beide Ringhälften 303 eine glatte, ballige Außenfläche 301.

An jeder Ringhälfte 303 ist nahe der Fuge 307 jeweils eine Durchführung 305 zum Durchziehen eines Kabelbinders und außerdem beidseits je eine randseitige Ausnehmung 302 zur Aufnahme des Kopfes eines Kabelbinders ausgebildet.

Der Innenumfang der Ringhälfte 303 ist - wie bei der Scheuerschutzvorrichtung 100 nach der ersten Ausführungsform - mit Rippen 309 und Nuten versehen, um ein Kabelklemmelement formschlüssig aufzunehmen oder zwei Wellrohre miteinander verbinden zu können. Unterschiedlich zu den anderen Ausführungsformen ist bei der Scheuerschutzvorrichtung 300 die Ausbildung bei der anderen Fuge 308.

Die Fuge 308 ist insbesondere in der Ansicht auf die Rückseite der Scheuerschutzvorrichtung 300 in Figur 9 erkennbar. Die beiden Ringhälften 303 laufen dort in komplementären Verzahnungen 311 aus, die ineinander steckbar sind und durch Einfügen eines zylindrischen Achselements in die Achsbohrung 306 ein Scharnier ausbilden.

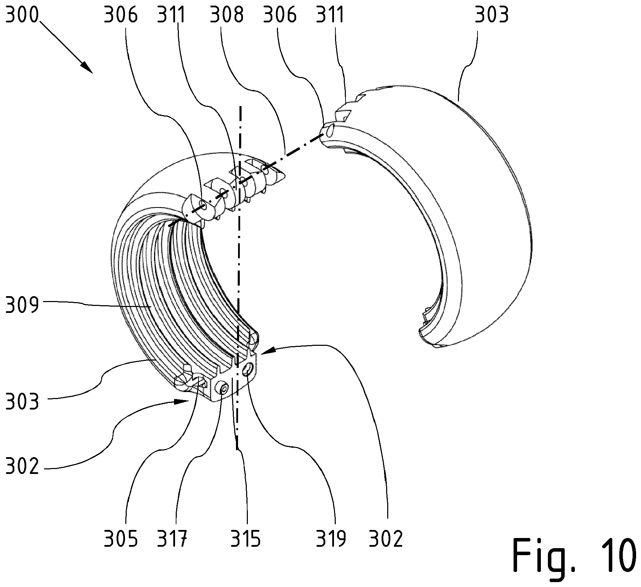

Figur 10 zeigt eine perspektivische Ansicht auf die beiden entfernt voneinander angeordneten Ringhälften 303. Am oberen Ende sind jeweils die Verzahnungen 311 mit den Achsbohrungen 306 vorgesehen. Am unteren Ende ist eine Anlagefläche 315 mit einer Zapfenaufnahmeausnehmung 319 und einem Zapfen 317 vorgesehen.

Der Zapfen 317 ist als eine vorspringende, angegossene und balligförmige Kugel ausgebildet. Daneben befindet sich die Zapfenaufnahmeausnehmung 319 zur Aufnahme der an der anderen Ringhälfte 303 angegossenen balligförmigen Kugel. Dieses Merkmal dient, wie auch schon bei den anderen Ausführungsformen beschrieben, nicht nur zur Positionierung und Zentrierung beider Ringhälften 303 zueinander, sondern auch zur vorläufigen Fixierung beider Ringhälften 303 bis der Kabelbinder eingezogen ist. Die angegossenen Zapfen 317 müssen dazu mit vertretbarem Kraftaufwand auf die Zapfenaufnahmeausnehmung 319 gedrückt werden. Die Formgebung ermöglicht, dass der zapfen 317 nach dem Einrasten in der Zapfenaufnahmeausnehmung 319 fixiert bleibt, bis die endgültige Fixierung der Ringhälften 303 mit Hilfe eines Kabelbinders sichergestellt ist. An den Anlageflächen 315 sind die Zapfenaufnahmeausnehmung 319 und der Zapfen 317 jeweils mit gleichem Abstand zu einer zwischen ihnen liegenden Symmetrieebene angeordnet, so dass der Zapfen 317 der einen Ringhälfte 303 in die Zapfenaufnahmeausnehmung 319 der jeweils anderen Ringhälfte eingreifen kann und umgekehrt.

Die Verzahnung 311 am jeweiligen anderen Ende der Ringhälften 303 ist nicht spiegelsymmetrisch zu einer Mittelebene der Ringhälfte 303. Vielmehr sind die gleich breiten Vor- und Rücksprünge so verteilt, dass sie ineinander greifen und die beiden Ringhälften 303 eine am Außenumfang wie an den beiden Stirnseiten bündige Ringstruktur bilden, wenn sie in der in Figur 10 gezeigten Position miteinander kombiniert werden.

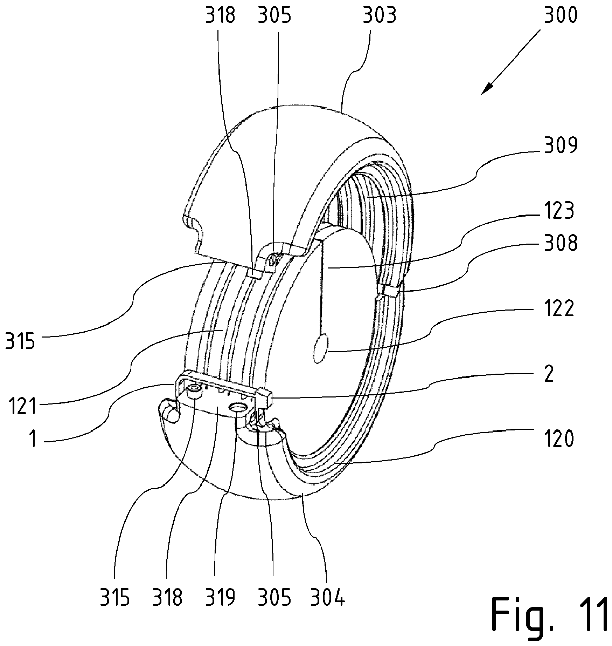

Fig. 11 zeigt die Scheuerschutzvorrichtung 300, die an der Achse 306 im Bereich der rückwärtigen Fuge 308 aufgeklappt ist. Die Ringhälften 303 sind an der hier nicht sichtbaren Achse im rückwärtigen Bereich fest miteinander verbunden. Dargestellt ist auch schematisch der ringförmige Verlauf eines Kabelbinders 1, der sich durch die Durchführungen 305 erstreckt. Der Kabelbinderkopf 2 ist in einer der randseitigen Ausnehmungen 302 aufgenommen. Um die Ringhälften 303 nach dem vorherigen Einrasten mittels Zapfen 318 und Zapfenaufnahmeausnehmungen 319 fest miteinander zu verbinden, muss der Kabelbinder durch die Ausnehmungen 311 an beiden Ringhälften geführt werden, bevor der Kabelbinder 1 geschlossen und festgezogen werden kann.

In die sich zwischen den Ringhälften 303 ausbildende Ringstruktur ist ein Kabelklemmelement 120 mit nur einer zentral angeordneten Kabeldurchführungsausnehmung 122 eingesetzt. Eine Trennfuge 121 in dem elastomeren Kabelklemmelement 120 erleichtert das Einsetzen oder Entnehmen eines Kabels oder eines Schlauchs.

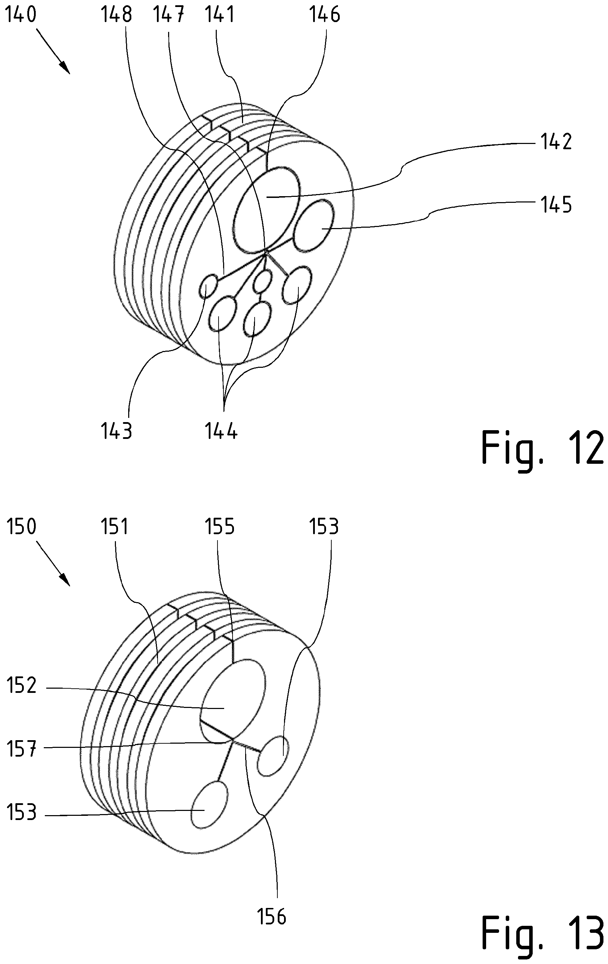

Figur 12 zeigt ein Kabelklemmelement 140 mit insgesamt sieben Kabeldurchführungsausnehmungen 142, 143, 144, 145, die verschiedene Durchmesser haben. Das Kabelklemmelement 140 ist auch hier eine im wesentlichen zylindrische Scheibe aus einem elastomeren Werkstoff, die am Außenumfang mit einem Wellrohrprofil 141 aus einer alternierenden Folge von Rippen und Nuten versehen ist. Eine erste Trennfuge 146 erstreckt sich vom Außenumfang durch die größte Kabeldurchführungsausnehmung 142 bis zu einem Zentrum 147. Von dort aus erstrecken sich mehrere radiale Trennfugen 148, die bis in die anderen Kabeldurchführungsausnehmungen 142, 143, 144, 145 führen.

Figur 13 zeigt ein Kabelklemmelement 150 mit drei Kabeldurchführungsausnehmungen 152, 153, die verschiedene Durchmesser haben. Das Kabelklemmelement 150 besitzt am Außenumfang ein Wellrohrprofil 151 aus einer alternierenden Folge von Rippen und Nuten. Eine erste Trennfuge 155 erstreckt sich vom Außenumfang durch die größte Kabeldurchführungsausnehmung 152 bis zu einem Zentrum 157. Von dort aus erstrecken sich zwei radiale Trennfugen 156, die bis in die anderen Kabeldurchführungsausnehmungen 153 führen.

## Patentansprüche

1. Scheuerschutzvorrichtung (100; 200; 300) für an beweglichen Maschinenteilen entlang geführte flexible Rohre, Schläuche oder Kabel, wenigstens umfassend zwei Ringhälften (103; 203; 303), die miteinander zu einer geschlossenen Ringstruktur mit wenigstens einer Durchführungsöffnung kombinierbar sind, wobei die Ringhälften (103; 203; 303) an wenigstens einer Fuge (107; 207; 307) aneinander liegen,
**dadurch gekennzeichnet,**
- **dass** die Ringhälften (103; 203; 303) jeweils an einem Ende durch wenigstens ein über eine erste Fuge (107; 207; 308) hinweg wirkendes Formschlussmittel aneinandergehalten sind und
- **dass** die Ringhälften (103; 203; 303) an wenigstens einer zweiten Fuge (107; 207; 307) mit wenigstens einem Kabelbinder (1) miteinander verbindbar sind, wobei der Kabelbinder (1) in beiden aneinander liegenden Ringhälften (103; 203; 303) formschlüssig gehalten ist und die Fuge (107; 207; 307) überbrückt.

2. Scheuerschutzvorrichtung (100; 200; 300) nach Anspruch 1, **dadurch gekennzeichnet, dass** die Ringhälften (103; 203; 303) jeweils wenigstens im Bereich der mit dem Kabelbinder (1) überbrückten Fugen (107; 207; 307) einen in der Breite reduzierten Endbereich aufweisen, womit wenigstens eine Ausnehmung (102; 202; 302) zur bündigen Aufnahme eines Kopfes (2) des Kabelbinders (1) ausgebildet ist.

3. Scheuerschutzvorrichtung (100; 200; 300) nach Anspruch 1 oder 2, **dadurch gekennzeichnet, dass** die Ringhälften (103; 203; 303) jeweils in wenigstens einem ihrer Endbereiche bei der Fuge (107; 207; 307) eine achsparallele Durchführung (105; 205; 305) zur Aufnahme des Kabelbinders (1) aufweisen.

4. Scheuerschutzvorrichtung (300) nach einem der Ansprüche 1 bis 3, **dadurch gekennzeichnet, dass** die Ringhälften (303) an einer Fuge (307) über einen Kabelbinder (1) verbindbar sind und an der anderen Fuge (308) über ein Scharnier gelenkig miteinander verbunden sind.

5. Scheuerschutzvorrichtung (300) nach Anspruch 4, **dadurch gekennzeichnet, dass** zwei Ringhälften (303) vorgesehen sind, die im Bereich des Scharniers jeweils mit einer nicht spiegelsymmetrischen Verzahnung (305) versehen sind, wobei die ineinandergreifenden Verzahnungen (305) beider Ringhälften (303) über wenigstens ein durch eine Achsbohrung (306) geführtes Achselement miteinander verbunden sind und das Scharnier ausbilden.

6. Scheuerschutzvorrichtung (100; 200; 300) nach einem der Ansprüche 1 bis 5, **dadurch gekennzeichnet,**
- **dass** an wenigstens einer Anlagefläche (115, 166; 215, 216; 315, 316) an einer der Ringhälften (103; 203; 303) wenigstens ein Zapfen (117, 217; 317) angeformt ist und
- **dass** an der anderen Anlagefläche (115; 215; 315) wenigstens eine Zapfenaufnahmeausnehmung (117, 217; 317) vorgesehen ist, in die der Zapfen (117, 217; 317) einsteckbar ist.

7. Scheuerschutzvorrichtung (100; 200; 300) nach Anspruch 6, **dadurch gekennzeichnet,**
- **dass** der Zapfen (117, 217; 317) als eine an die Anlagefläche (115; 215; 315) angeformte, ballige Kugel ausgebildet und
- **dass** die Zapfenaufnahmeausnehmung (118; 218; 318) am Übergang zur Anlagefläche (116; 216; 315) eingeschnürt ist.

8. Scheuerschutzvorrichtung (100; 200) nach Anspruch 6 oder 7, **dadurch gekennzeichnet, dass** der Zapfen (117, 217) und die Zapfenaufnahmeausnehmung (118; 218) jeweils mittig auf einer Symmetrieachse der Anlagefläche (115, 116; 215, 216) und/oder der Ringhälfte (103; 203) angeordnet sind.

9. Scheuerschutzvorrichtung (300) nach Anspruch 6 oder 7, **dadurch gekennzeichnet, dass** wenigstens ein Zapfen (317) und eine Zapfenaufnahmeausnehmung (318) jeweils mit gleichem Abstand zu einer Symmetrieachse der Anlagefläche (315) und/oder der Ringhälfte (303) auf der Anlagefläche (315) angeordnet sind

10. Scheuerschutzvorrichtung (100; 200; 300) nach einem der vorhergehenden Ansprüche, **dadurch gekennzeichnet, dass** wenigstens einer der beiden Ringhälften (103; 203; 303) eine Verschleißschutzanzeige in Form wenigstens eines unterhalb der Außenfläche (101, 201, 301) angeordneten, farblich abgesetzten Elements oder einer farblich abgesetzten Schicht enthält.

11. Scheuerschutzvorrichtung (100; 200; 300) nach einem der vorhergehenden Ansprüche, **dadurch gekennzeichnet, dass** wenigstens ein aus einem elastomeren Werkstoff gebildetes Kabelklemmelement (120, 130, 140, 150) vorgesehen ist, das wenigstens eine Kabeldurchführungsausnehmung (122, 132, 142, 143, 144, 145, 152, 153) aufweist.

12. Scheuerschutzvorrichtung (100; 200; 300) nach Anspruch 11, **dadurch gekennzeichnet, dass** jede Kabeldurchführungsausnehmung (122, 132, 142, 143, 144, 145, 152, 153) über wenigstens eine Trennfuge (123, 133, 146, 148, 156) mit dem Außenumfang des Kabelklemmelements (120, 130, 140, 150) verbunden ist.

13. Scheuerschutzvorrichtung (100; 200; 300) nach Anspruch 11 oder 12, **dadurch gekennzeichnet, dass** das Kabelklemmelement (120, 130, 140, 150) am Außenumfang ein Wellrohrprofil (121, 131, 141, 151) mit einer alternierenden Folge von Rippen und Nuten besitzt.

14. Scheuerschutzvorrichtung (100; 300) nach einem der vorhergehenden Ansprüche, **dadurch gekennzeichnet, dass** an der inneren Umfangsfläche der Ringhälften (103; 303), ein Wellrohrprofil mit einer alternierenden Folge von Rippen (109, 309) und Nuten für das Zusammenwirken mit dem Außenprofil eines flexiblen Wellrohres oder eines Kabelklemmelements Kabelklemmelement (120, 130, 140, 150) ausgebildet ist.

15. Scheuerschutzvorrichtung (200) nach einem der Ansprüche 1 bis 13, **dadurch gekennzeichnet, dass** die innere Umfangsfläche der Ringhälften (203) mit einer einzigen ringförmigen Rippe (20) versehen ist
